Europäisches Patentamt

European Patent Office

Office européen des brevets

(11) Publication number: **0 119 348**
**A2**

## EUROPEAN PATENT APPLICATION

(21) Application number: **83307050.1**

(22) Date of filing: **18.11.83**

(51) Int. Cl.³: **C 04 B 41/10, B 44 C 1/10**

(30) Priority: **18.11.82 GB 8232867**

(43) Date of publication of application: **26.09.84**
**Bulletin 84/39**

(84) Designated Contracting States: **AT BE CH DE FR GB IT LI LU NL SE**

(71) Applicant: **Mapstone, Kenneth, Unit, 1 Briton Ferry Industrial Estate Briton Ferry, Neath, West Glamorgan South Wales, SA11 2HZ (GB)**

(72) Inventor: **Mapstone, Kenneth, Unit, 1 Briton Ferry Industrial Estate Briton Ferry, Neath, West Glamorgan South Wales, SA11 2HZ (GB)**

(74) Representative: **Stringer, David Hiram et al, W.P. THOMPSON & CO Coopers Building Church Street, Liverpool L1 3AB (GB)**

(54) Decoration of wall tiles.

(57) According to the present invention, a ceramic tile is provided with a glaze or other coating which is capable of absorbing on/into or through its surface an image formed from dyes, such as emulsion dye colourings, or other image-forming material. The invention thus provides a method of decorating a ceramic tile wherein the decorative image is applied on/into or through the glaze on or penetrating the tile, the glaze being formulated to absorb and retain the image. The image may be applied on or into the glaze or other tile coating from an image carrier preferably by colour transfer molecule bonding.

*CH10/M*

0119348

## DESCRIPTION

## DECORATION OF WALL TILES

This invention relates to the graphic arts and to its uses therein, especially in conjunction with the decoration of ceramic tiles.

A conventional method of decorating ceramic tiles by conventional tile decorating techniques, wherein the tile is glazed after the decoration has been applied, can take twelve hours. Moreover, with this method it is difficult to achieve consistent reproduction of colour.

An object of the invention is to provide a much quicker method of decorating ceramic tiles.

According to the present invention, a ceramic tile is provided with a glaze or other coating which is capable of absorbing on/into or through its surface an image formed from dyes, such as emulsion dye colourings, or other image-forming material. The invention thus provides a method of decorating a ceramic tile wherein the decorative image is applied on/into or through the glaze on or penetrating the tile, the glaze being formulated to absorb and retain the image. The image may be applied on or into the glaze or other tile coating from an image carrier, preferably by colour transfer molecule bonding.

The glaze or other coating may be applied to the tile by any suitable method such as spraying,

2.

0119348

curtain coating, roller coating, spin coating, soaking or powder coating.

Compared with convention glazes, the glaze used in the present invention is a synthetic material which is particularly sensitive to dyes, especially dispersed or subliminal, whereby the glaze is capable of absorbing and retaining them as an image. The synthetic material of the glaze or other coating may be a synthetic resin or plastics material. Preferred resins for the glaze are an acrylic/urethane resin or an acrylic/polyester resin, which may be crosslinked with a polyisocyanate, such as a di-isocyante. Thermoplastic resins such as acrylic resins may also be used for the glaze and the use is also envisaged of silicone resins, melamine/formaldehyde resins, urea/formaldehyde resins polyester/urea resins or phenol/formaldehyde resins as a glazing medium. The glaze or other tile coating may contain a filler, such as powdered silica. The resultant glazed or coated ceramic tile looks, feels, fixes, grouts and cuts like a conventional ceramic tile but can be printed with a coloured image after formation. Alternatively, resin compounds, etc may be incorporated within the composite structure of the tile mass with or without glaze/coating. Thus images may be absorbed into the structure directly.

The image carrier may comprise an absorbent, organic, fibrous substrate such as paper with a dye image incorporated therein or thereon.
Preferably a carbon material such as charcoal is
provided withon or on the fibrous structure to absorb
excess colourings and thereby help protect the apparatus
used during the image interchange on/in or through
the tile.

It will be appreciated that the image, the
carbon type material and the absorbent fibrous substrate
are stratified to produce a film or sheet which can
support visible images on one face whilst being black
on the other.

Optionally, the dye image may be coated with
a sealer or sealing layer to prevent premature
sublimation of the dye from the fibrous film and
give it good shelf life. The sealer may be of gum
or size and may be applied for example by roller coating
or spraying.

The dyes which form the dye image may be applied
to the film in a liquid base in which the dye is
dissolved or suspended. The base may be a water base,
or an oil base, (such as linseed oil), and may also
contain a carrier for the dye, such as vinyl resin or
other resin. The dyes are preferably dispersed dyes
and/or subliming dyes (dyes which sublimate) e.g.
C.I. index reference amine type red number 902 or red
number 60.

0119348

Conventional photomechanical colour printing techniques may be used to form the image on the image carrier from the desired coloured artwork. Thus the images may be applied to the image side of the film by means of a set of colour printing plates derived from a colour photograph of the artwork.

Alternatively, the dye could be applied electrostatically as a powder. For example, the toner in a xerographic copier could be replaced by a powdered dye, and a xerographic image of the desired artwork then made, preferably on suitably charged fibrous film.

The decorative image may be interchanged or transferred from film to the tile as follows: The film is placed with the visible dye image uppermost on a resistant supporting bed which is preferably soft, compressible and/or yielding and preferably able to resist extremes of temperature. (If an optional sealer is present then the sealer is uppermost).

The tile may be placed with its receptive face in contact with the film. A platen is used to apply contact pressure and an appropritate energy source such as heat may be included if necessary. This pressure is applied to the top of the tile whereby image interchange can take place. Using wavelengths of energy ranging from infra red through to microwave energy bands image interchange is achieved and may be carried out instantly or if preferred through a time cycle such as 10 minutes. The energy sources may be infrared (heat), ultra violet, conductive, ultrasonic or microwave as described later.

The invention includes apparatus for interchanging the decorative image from the film into the tile and comprising a heat-resisting soft bed (also termed a flexible contact bed) for supporting the film and tile, a carriage on which the soft bed is mounted, said carriage being movable between a first open position wherein the film and tile may be positioned on the soft bed and a second, enclosed position wherein the image may be interchanged, a platen mounted above the second position and being movable, for example by a jacking mechanism, to apply contact pressure to the tile and film to effect the image interchange between film and tile, and a suitable energy source positioned therein to facilitate the image interchange. Preferably the apparatus may be dimensioned to print a batch of tiles simultaneously.

A preferred feature of the apparatus design is that the flexible contact bed may be ventilated by compressed air following each decorative cycle, in order to re-establish a constant, recurring level of consistent, uniform resilience, within the flexible base contact bed.

This is particularly preferred in cases where residual temperatue build up occurs in the contact base bed and when certain energy sources are incorporated (ie infra red).

A ducted compressed air supply provided by axial fan for example may be introduced beneath the contact bed thus directing a flow of compressed air which passes through a perforated rigid bed support (the carriage) and into the flexible contact bed itself thus ventilating the bed to decompress the flexible base bed material, and thus dissipating any residual temperature build up in the bed at the same time if required. A preferred feature is to construct the flexible contact bed in dissected form, for example from closed cell silicone rubber tiles which can be fixed in their centres to a rigid base board (the carriage) thus permitting ventilation between each rubber tile. The rate of ventilation required is dependent upon the density of the flexible contact bed material incorporated.

An alternative method of achieving a result may be by the use of water or other liquid (e.g. oil), pressure fed through expandible jackets and/or capillary tubes, or other such flexible retention chambers thus internally displacing the flexible contact bed filling and thus causing a ventilating effect.

In order that the apparatus may allow re-loading of tiles whilst carrying out a decorating cycle, a preferred embodiment may comprise a two tier ramp carriage pair both carriages of which support flexible contact beds.

Example

Ramp carriages 'A' and 'B' are so constructed using identical rubber type ramps and compressible spring loaded bearing as to enable one carriage to ride over the back of the other and vice versa to effect an interchangeable two tier unit thus allowing carriage 'A' for example to be loaded whilst carriage 'B' is being processed or, vice versa, carriage 'B' may be loaded whilst carriage 'A' is being processed.

The advantage is evident as this feature doubles the capacity of the apparatus without the need for extended loading space.

The invention will now be described in more detail by way of example.

1. The desired image or range of images which are to appear in the tiles is firstly photographed onto a conventional slide or transparency.

2. All the colours are then separated out of the transparency into four individual base colours, red, blue, yellow and black by conventional camerawork and scanning techniques as in conventional printing and four separate printing plates are made one for each colour. Screens may be used as in screen printing. Rubber rollers may be used as in flexographic printing. Xerography may be used. An image may be optically scanned by computer controlled laser which may control

8.

0119348

a spray head thus enabling a composite image in four colours to be sprayed out as a corresponding image of the required size corresponding to the scanned artwork.

3. The previously described absorbent film serving as an image carrier is printed by conventional printing techniques using conventional printing machines. Instead of printing images in ink however, images are printed with a formulated coloured suspension or medium consisting of a normal lithographic, screen or flexographic base medium formulation or other carrier in which is dispersed or dissolved the selected coloured dispersed dyestuff.

4. During graphic reproduction these dyes are absorbed into the film, whereupon the medium evaporates and the dye remains within or on the composite structure of the carrier. The image is printed on the image face of the film. The end result is an image carrier with a simple or complex image, depending on the requisite artwork, reproduced onto the carrier.

5. A tile biscuit substrate prior to glazing may be soaked with a two pack clear acrylic urethane resin, having the following composition:

Clear component

| | |
|---|---|
| acrylic/urethane resin | 58.5% |
| solvent IBA/NP | 41.5% |

hardner

| | |
|---|---|
| resin desmodus | 48% |
| solvent xylol/EGA | 52% |

9.

A further example of such a two pack material is a two pack acrylic/polyester resin. However, as an alterantive to a two pack resin, the following may be used:

Stoving wet polyester clear resin

| | |
|---|---|
| Polyester/urea resin | 83.5% |
| solvent xylol/solvesse | 15% |
| u.v. light absorber | 1% |
| wetting agent | 0.5% |

Due to absorbent nature of the biscuit the resin compound is taken up into the biscuit structure after which cross linking takes place and resin/polymer and biscuit become one composite structure. The biscuit thus aquires a coating of the cured resin and can be further overcoated if required once its porosity has been saturated to the full; a further resin to produce different surface glazed effects can be applied if so required. Also these biscuits are then fired at temperatures of up to 100°C to cure/fuse the resins fully and to drive all carriers (such as solvents) from the resins or receptive glazes.

6. The resin or glaze may be incorporated as part of the biscuit's composite structure during forming/production for example by pressing.

Various image processing machines specifically designed may be used for the purpose of interchanging the composite coloured image in the image carrier into the fired resin based tile biscuit. The machine may comprise a load carriage which rides or slides on rails. This carriage travels into an enclosed chamber and by means of a series of microswitches, a motor may be powered which in turn drives, by a simplex gear system, screw jacking mechanisms to bring a platen into contact with a load carrier bed; pneumatic/hydraulic means may also be used. Onto this bed, which may preferably be constructed of porous/elastic heat resistant materials such as glass fibre, carbon fibre, nomex fibre, asbestos fibre, mineral wool, steel wool, open and closed cell silicone rubber, and any appropriate covering and adequately supported, the previously described image carrier film is placed in contact with the resin based tile biscuit which is glazed face down upon it. The load carriage when pushed in carries the tile and image carrier into the enclosed chamber whereupon the motor drive is activated to compress the tile and the image carrier together between the platen and the base bed. During processing the ceramic tile biscuits are excited by any of the previously listed energy sources. As the tile or tiles become uniformally excited, the resin molecule also becomes excited in conjunction with the ceramic biscuit and the dyes in the image carrier beneath are absorbed into the tile over a short time cycle. When the tile becomes excited,

11.
0119348

this in turn excites the dispersed dye on the image carrier and it is thus interchanged into the tile; the carbon in or on the image carrier absorbs any excess dye and prevents it from permeating the base bed. Once the cycle is completed, the product is a decorated ceramic based wall tile covering.

The invention has the following advantages;

The tiles of the invention are not subject to glaze shattering like conventional tiles and are durable, extremely colour fast, have better insulative properties and are far lighter than conventional tiles.

Perfectly detailed images can for the first time be produced in tiles at will and at very competitive prices with extreme clarity and definition.

Tile decorating can now be carried out at the point of sale (the retail shop for example) as opposed to tile factories currently using slower and more costly techniques. Consistency of colour can be achieved time after time by this method, this being currently a constant problem in the tile trade.

Ever changing fashions can be speedily catered for.

Designs can be overprinted time after time to give composite effects. The overprinting is limited only by the glaze becoming totally saturated with dyes and unable to absorb any more.

The decorating process may be extremely fast or as slow as required as opposed to the twelve hours it normally takes using conventional tile decorating techniques. While the invention has been described with reference to ceramic wall tiles, it is generally applicable to ceramic or non-ceramic tiles and indeed to substrates generally. Thus the decorative image may be interchanged by means of the invention on/into any substrate overlaid with a dye absorbing layer or on any dye absorbing substrate.

The invention will now be further described by way of example with reference to the accompanying drawings, in which:-

Fig. 1 is a fragmentary section of a tile,

Fig. 2 is a diagrammatic section of an image carrier,

Fig. 3 and 4 illustrate the use of various energy sources in the printing of tiles,

Fig. 5 is a side elevation of an apparatus for printing tiles,

Fig. 6 is a section on the line 6-6 of Fig. 5,

Fig. 7 is a section on the line 7-7 of Fig. 5,

Fig. 8 is a schematic illustration of a scanning device for the production of images,

Fig. 9 is a perspective view of a dissected soft bed, which may be used in place of the soft bed shown in Fig. 7,

Fig. 10 is an illustration of a form of carriage for use in a two carriage tile printing apparatus, and

Figs. 11 to 13 illustrate the interchangeability of the carriages in a two carriage tile printing apparatus.

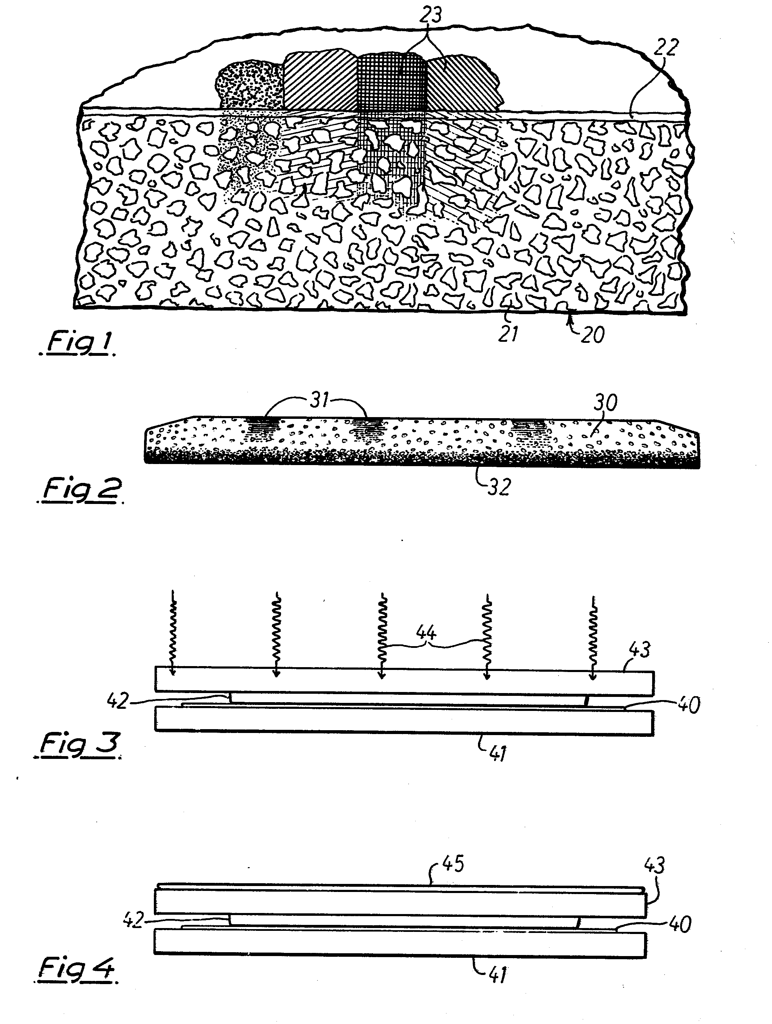

In Fig. 1 a porous ceramic tile biscuit or substrate 20 comprises particulate material 21 and carries a coating or glaze 22. On the glaze 22 are image-forming dyestuffs 23 which permeate through the glaze and into the substrate 20 for some distance. The substrate could be formed of fibres instead of the particulate material.

The image carrier shown in Fig. 2 consists of an absorbent organic fibrous substrate 30, such as paper, supporting an interspersed dye image 31 on one face and carbon or carbon-like material 32 on the other face, there being penetration of the dye and carbon into the substrate.

In Fig. 3, an image carrier 40, dye face uppermost, is supported on a soft bed 41 which is rigidly supported as described above. A tile 42 is placed glaze side down on the image carrier and is pressed into contact with the image carrier by means of a platen 43 to which is attached an energy source 44, which may be an infra red, ultra violet, ultrasonic or microwave energy source. In the case of ultraviolet source, the platen may be of quartz or similar u.v. transmitting material.  The microwave source may include a magnatron valve.

The assembly of Fig. 4 differs from that of fig. 3 in that the energy source is an energy conductor 45, such as a tube or wire.

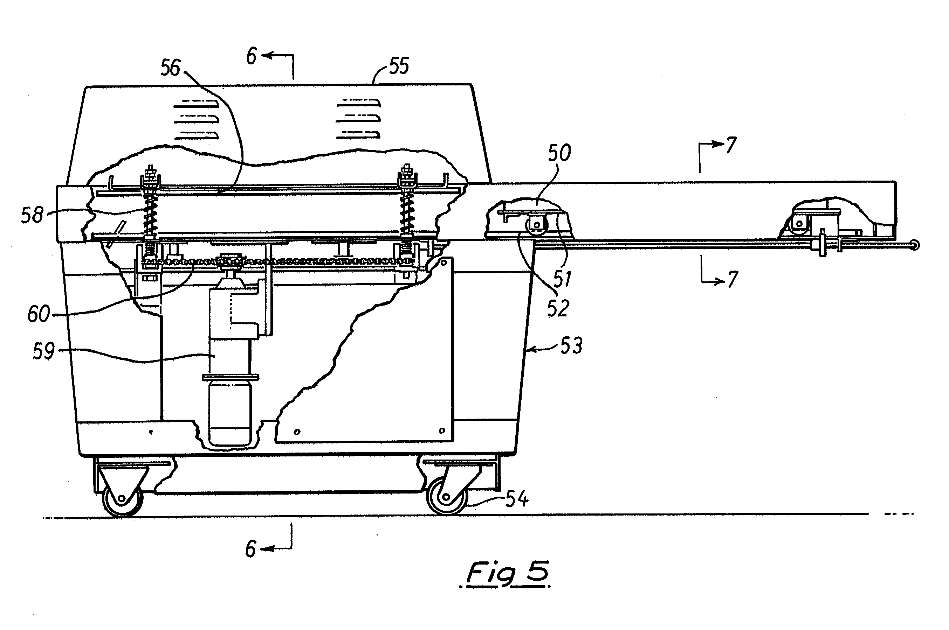

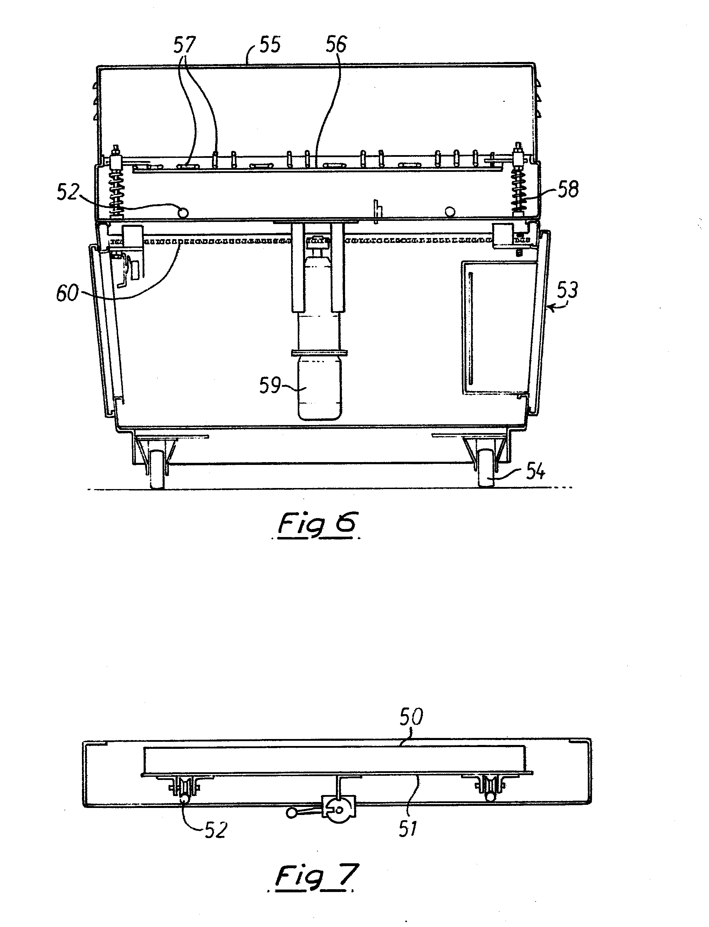

Referring to Figs. 5 to 7, a soft bed 50 is supported on a wheeled carriage 51 running on rails 52 carried by the body 53 of the apparatus, which is mounted on wheels or castors 54, the carriage being shown in the first or loading position, from which it may travel into an enclosed chamber 55 to a second position beneath a platen 56 provided with infra red heating bars 57.  The platen is actuated by screw jacking mechanisms 58, driven from a motor 59 through a simplex gear system 60, to bring it into contact with the bed.

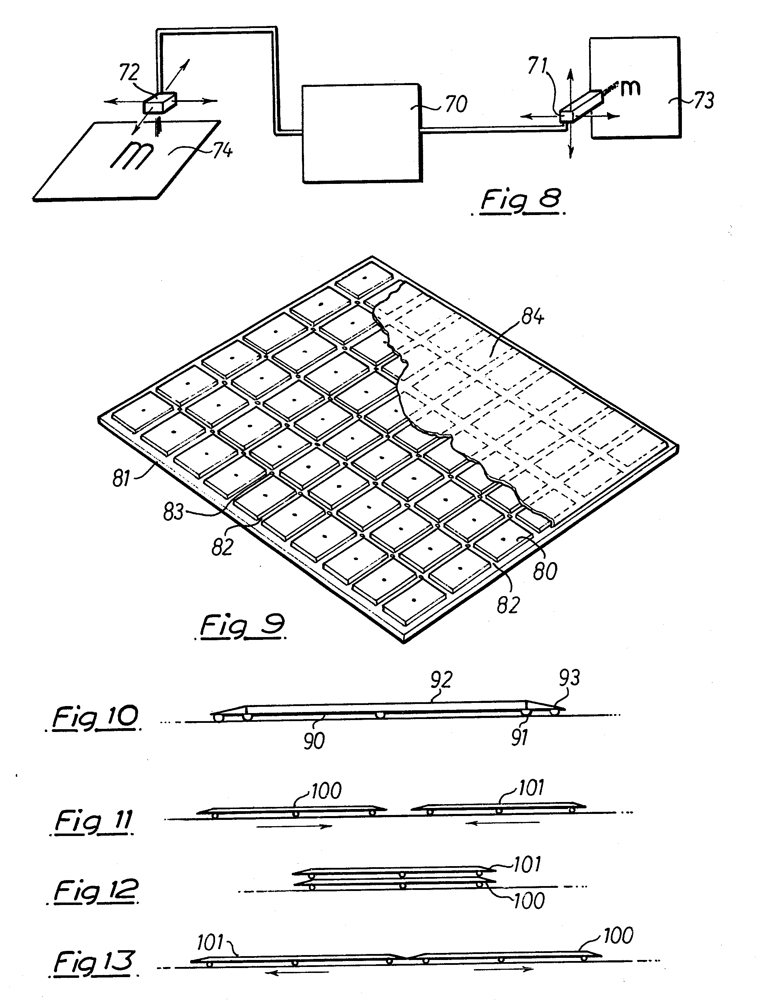

In Fig. 8, a computer processor 70 links a laser or similar scanner 71 to a spray head or similar applicator 72 whereby original artwork 73 may be reproduced as an image 74.

The soft bed shown in Fig. 9 is made up of a plurality of pads 80 of resilient or flexible material.  Each pad 80 is fixed at its centre to a common support (or carriage) 81, the spaces between the pads providing channels 82 for the flow of fluid such as air.  Holes 83 are provided in the support at the intersection of the channels.  The pads are provided with a flexible cover 84.  To cool and decompress the pads, air flows

0119348

up through the holes 83, along the channels 82 and out through the cover 84.

The carriage 90 of Fig. 10 is supported on ball or similar castors 91 which may be spring loaded and carries a soft bed 92 having at its end ramps 93 which may be of rubber. The carriages 100, 101 shown in Figs. 11 to 13 are of the type shown in Fig. 10 and may be interchanged by movement as shown by the arrows (Figs. 11, 13) via the position shown in Fig. 12 where carriage 101 overrides carriage 100.

In using the apparatus of Figs. 5 to 7, positioning a plurality of tiles on an image carrier on the soft bed may be facilitated by providing the image carrier with two types of images: transferable images for printing onto the tiles and non-transferable images for registration purposes.

........................................................

0119348

## CLAIMS

1. A tile characterised in that it is provided with a glaze or other coating which is capable of absorbing on, into or through its surface an image formed from dyes or other image-forming material.

2. A tile as claimed in claim 1 characterised in that the tile is a ceramic tile and the glaze or coating is a synthetic resin or plastics material.

3. A tile characterised by a composite structure and containing as one of its components a material which is capable of absorbing an image formed from dyes or other image-forming material.

4. A tile as claimed in claim 3 characterised in that the material capable of absorbing an image is a synthetic resin or plastics material and the tile also contains a ceramic material as another of its components, the components being in admixture.

5. A method of decorating a tile or other substrate characterised in that a decorative image is applied on, into or through a glaze or other coating on the tile or substrate, the glaze being formulated to absorb and retain the image.

6. A method as claimed in claim 5 characterised in that the tile is a ceramic tile and the glaze or coating is a synthetic resin or plastics material.

7. A method as claimed in claim 5 or 6 characterised in that the image is a dye image and is applied onto or into the glaze or other coating from an image carrier.

8. An image carrier for tile decoration and characterised by an absorbent, organic, fibrous substrate having a dye image incorporated therein or thereon and a carbon material provided within or on the fibrous substrate to absorb excess dye when the image is transferred to the tile.

9. An image carrier as claimed in claim 8 characterised in that the dye-image, the carbon material and the absorbent, fibrous, substrate are stratified to produce a film or sheet which supports visible dye-images on one face and is black on the other face.

10. An apparatus for transferring an image from an image carrier to a tile and characterised by a heat-resisting soft bed for supporting the carrier and tile, a carriage on which the soft bed is mounted, said carriage being movable between a first, open position wherein the image carrier and tile may be positioned on the soft bed and a second, enclosed position wherein the image may be transferred a platen mounted above the second position and being movable to apply contact pressure to the tile and image carrier to effect the image transfer from carrier to tile and an energy source positioned in the apparatus to assist the transfer of the image.

11. An apparatus as claimed in claim 10 characterised in that the energy source is an infra red energy source.

12. An apparatus as claimed in claim 10 or 11 characterised in that means are provided to ventilate the soft bed to decompress the bed and dissipate any excess temperature in the bed.

13. An apparatus as claimed in any one of claims 10 to 12 characterised in that there are two carriages, positionable in the first and second positions respectively and being mutually interchangeable whereby one carriage may be loaded with the image carrier and tiles while the transfer of the images to the tiles on the other carriage is taking place.

*Fig 1.*

*Fig 2.*

*Fig 3.*

*Fig 4.*

Fig 5

2/4

0119348

Fig 6

Fig 7

Fig 8

Fig 9

Fig 10

Fig 11

Fig 12

Fig 13